# EUROPÄISCHE PATENTSCHRIFT

(11) **EP 2 625 758 B1**
(45) Veröffentlichungstag und Bekanntmachung des Hinweises auf die Patenterteilung: **25.06.2014**
(21) Anmeldenummer: 11784413.4
(22) Anmeldetag: 30.09.2011
(51) Int. Cl.: H02G 15/04

(54) **KABELABSCHLUSSEINRICHTUNG**
CABLE TERMINATION DEVICE
DISPOSITIF DE TERMINAISON DE CÂBLE

(30) Priorität: 04.10.2010 DE 102010047217
(43) Veröffentlichungstag der Anmeldung: 14.08.2013
(73) Patentinhaber: Phoenix Contact GmbH & Co. KG, 32825 Blomberg (DE)
(72) Erfinder: FRANKE, Jens, 32676 Lügde (DE); FÜHRER, Thomas, 32825 Blomberg (DE)
(86) Internationale Anmeldenummer: PCT/EP2011/004925
(87) Internationale Veröffentlichungsnummer: WO 2012/045430

(56) Entgegenhaltungen:
- EP-A1- 1 096 605
- DE-A1- 10 244 481
- DE-U1- 29 908 267
- DE-U1-202008 015 523
- US-A- 5 059 748
- US-B1- 6 329 601

## Beschreibung

Die vorliegende Erfindung betrifft eine Kabelabschlusseinrichtung, welche dafür vorgesehen und geeignet ist, wenigstens ein Kabelende berührsicher zu terminieren.

Die US 6,329,601 B1 offenbart ein wasserdichtes Gehäuse für die gespleißten Enden von Telefonkabeln, welches typischer Weise unterhalb der Erdbodenoberfläche montiert wird und bei Bedarf einfach wieder geöffnet werden soll. Bei der US 6,329,601 B1 wird eine mit einem Innengewinde versehene Kappe auf ein Basisteil aufgeschraubt, um das Gehäuse zu bilden.

Mit der DE 102 44 481 A1 ist eine Verschraubung für abgedichtete Leitungsdurchführungen bekannt geworden, bei der ein Klemm-Dichteinsatz von einem Doppelnippel und einer Druckschraube so verformt wird, dass sowohl eine Zugentlastung als auch eine Abdichtung der durchgeführten Leitung erfolgt.

Aus der US 5,059,748 ist ein Gehäuse für die Aufnahme der Enden von Telekommunikationskabeln bekannt, bei dem ein O-Ring zur Abdichtung an einer Klemme eingesetzt wird.

Die DE 20 2008 015 523 U1 zeigt eine Verschraubung für abgedichtete Leitungsdurchführungen.

Mit der EP 1 096 605 A1 ist eine Kabelanschluss- oder Kabelverbindungseinrichtung bekannt geworden, bei der eine Überwurfmutter auf ein Außengewinde eines Geräteanschlussbauteils aufgeschraubt wird.

Ein vor Umwelteinflüssen wie Staub und Wasser abgedichtetes Kabelende wird beispielsweise bei der Montage von Photovoltaikanlagen häufig benötigt. Solche Kabelabschlusseinrichtungen sollten regelmäßig wenigstens die Schutzklasse IP 67 gemäß DIN EN 60529 bzw. DIN 40050 Teil 9 aufweisen. Das bedeutet, dass die Kabelabschlusseinrichtung staubdicht ausgeführt ist und wenigstens Schutz gegen zeitweiliges Untertauchen der Kabelabschlusseinrichtung in Wasser bietet, da solche Gegebenheiten bei den frei verlegten Kabeln beispielsweise bei der Verwendung in Photovoltaikanlagen auftreten können. Außer bei dem Einsatz an Photovoltaikanlagen ist die Verwendung der erfindungsgemäßen Kabelabschlusseinrichtung aber auch an sonstigen elektrischen oder elektronischen Bauteilen möglich.

Zur Vereinfachung der Montage von Photovoltaikanlagen können die leistungsführenden Kabel in regelmäßigen Abständen z. B. mit T-Stücken direkt auf der Rolle hergestellt werden, um die Konfektionierung und das Anschließen der Solarmodule später zu erleichtern. Dann weist beispielsweise ein solches Kabel in vorbestimmten Abständen von z.B. 1 m oder dergleichen T-Stücke zum Anschluss von Solarmodulen auf. Für die Montage von Solarmodulen wird es dann nur erforderlich, die gewünschte Länge Solarkabel von der Rolle abzurollen und nach der gewünschten Länge abzuschneiden.

Bei der anschließenden Montage können an den schon vorhandenen T-Stücken die Solarmodule seitlich angeschlossen werden. Wichtig ist es jedoch, dass das abgeschnittene freie Ende des Solarkabels zuverlässig terminiert wird. Aufgrund der bei Photovoltaikanlagen möglichen hohen Stromstärken und Spannungen ist es wichtig, die stromführenden Kabel berührsicher und dauerhaft zuverlässig zu terminieren.

Da mit der zunehmenden Montage von Photovoltaikanlagen auf den Dächern von Privatleuten auch zunehmend unerfahrene Personen Zugang zu solchen elektrischen Anlagen haben, ist es wichtig, solche Solarkabel so zu terminieren, dass die Bewohner oder Eigentümer eines mit einer Photovoltaikanlage ausgerüsteten Hauses einer möglichst geringen Gefährdung ausgesetzt werden.

Es ist deshalb die Aufgabe der vorliegenden Erfindung, eine Kabelabschlusseinrichtung zur Verfügung zu stellen, welche einfach zu montieren ist und welche einen zuverlässigen Berührschutz bietet.

Diese Aufgabe wird gelöst durch eine Kabelabschlusseinrichtung mit den Merkmalen des Anspruchs 1. Bevorzugte Weiterbildungen der Erfindung sind Gegenstand der Unteransprüche. Weitere Vorteile und Merkmale der Erfindung ergeben sich aus dem Ausführungsbeispiel.

Die erfindungsgemäße Kabelabschlusseinrichtung weist ein Gehäuse mit wenigstens einer Einführöffnung für ein Kabel auf, um das Kabelende berührsicher zu terminieren. Das Gehäuse umfasst eine Dichtkappe und eine damit zusammenwirkende Schraubeinheit. Dabei ist an der Schraubeinheit die wenigstens eine Einführöffnung zur Aufnahme wenigstens eines Kabelendes vorgesehen und die Dichtkappe ist zum äußeren Ende hin ballig abgerundet ausgebildet. Die Dichtkappe weist über wenigstens einen Längsabschnitt ein Außengewinde auf und die Schraubeinheit weist über wenigstens einen Längsbereich ein Innengewinde auf.

Die erfindungsgemäße Kabelabschlusseinrichtung hat viele Vorteile, da sie eine einfache Montage und ein hohes Maß an Sicherheit bietet. Dadurch, dass die Dichtkappe zum äußeren Ende hin abgerundet ausgebildet ist, ist eine Demontage von Hand ohne weiteres Werkzeug nicht möglich. Ein Abschrauben der Schraubeinheit ist nicht per Hand ohne weiteres möglich, da die Hand an der abgerundet ausgebildeten Dichtkappe keinen ausreichenden Halt findet. Damit bietet die erfindungsgemäße Kabelabschlusseinrichtung auf einfache Art und Weise ein hohes Maß an Sicherheit, insbesondere bei der Verwendung an Solarkabeln für Photovoltaikanlagen. Unbedarfte Personen, die eine solche Kabelabschlusseinrichtung in die Hand bekommen, können die Kabelabschlusseinrichtung nicht ohne spezielles Werkzeug öffnen.

Ein weiterer Vorteil ist, dass durch die Formgebung der Dichtkappe ein zuverlässiger und dauerhafter Schutz vor einem zufälligen oder unbeabsichtigten Öffnen der Kabelabschlusseinrichtung erlaubt wird, selbst wenn die typischerweise aus Kunststoff bestehenden Gehäuseteile wie Dichtkappe und Schräubeinheit Setzungserscheinungen unterliegen sollten.

Es sind im Stand der Technik Schutzvorrichtungen vor Kabelenden bekannt geworden, aber Verteilerdosen, bei denen einzelne Eingänge durch Dichtstopfen abgedichtet werden, können auch ohne Werkzeug geöffnet werden, sodass sich Privatpersonen, die sich mit der Gefahr beim Öffnen von Kabelabschlusseinrichtungen von Photovoltaikanlagen nicht auskennen, einem erheblichen Risiko aussetzen können.

Ein weiterer Nachteil ist der Kostenpunkt solcher Bauteile und der wesentlich erhöhte Montageaufwand. Hier bietet die Erfindung den Vorteil eines geringen Montageaufwandes und den weiteren Vorteil geringer Kosten.

In einer bevorzugten Weiterbildung ist an dem äußeren Ende der Dichtkappe eine Kontereinrichtung vorgesehen, die insbesondere mit einem Werkzeug ergreifbar ist. Eine Kontereinrichtung an dem äußeren Ende der Dichtkappe bietet den Vorteil, dass die Dichtkappe mit einem an der Kontereinrichtung angreifenden Werkzeug gehalten werden kann, während die Schraubeinheit verschraubt wird. Nach erfolgter Verschraubung kann das Werkzeug entfernt werden, sodass ein nachfolgendes Wiederöffnen ohne Werkzeug nicht möglich ist.

Vorzugsweise umfasst die Kontereinrichtung wenigstens einen Schlitz und/oder ein Durchgangsloch, welches sich quer zur Längserstreckung eines zu terminierenden Kabels erstreckt. Durch ein Durchgangsloch kann beispielsweise ein Werkzeug wie ein Schraubendreher durchgesteckt werden und somit zur Lagefixierung verwendet werden. Die Schraubeinheit kann gegenüber der örtlich fixierten Dichtkappe gedreht werden, um das Gehäuse der Kabelabschlusseinrichtung zu schließen und das darin aufgenommene Kabel berührsicher zu terminieren.

Erfindungsgemäß ist die Dichtkappe an dem äußeren Ende ballig ausgestaltet. Eine solche ballige Ausgestaltung bietet Vorteile, da eine Fixierung des balligen Endes der Dichtkappe mit der Hand nur sehr schwierig möglich ist. Ein zufälliges Öffnen der Kabelabschlusseinrichtung ist somit praktisch nicht möglich.

Erfindungsgemäß weist die Dichtkappe über wenigstens einen Längsabschnitt ein Außengewinde auf. Erfindungsgemäß weist die Schraubeinheit über wenigstens einen Längsbereich ein Innengewinde auf. Das Innengewinde der Schraubeinheit wirkt mit dem Außengewinde der Dichtkappe zusammen, um das Gehäuse der Kabelabschlusseinrichtung zu verschrauben.

Vorzugsweise ist wenigstens ein Spleißring wenigstens teilweise innerhalb der Dichtkappe aufgenommen.

Vorteilhafterweise weist die Dichtkappe eine Klemmeinrichtung mit wenigstens einer Klemmkontur und/oder der Spleißring weist wenigstens eine Klemmnut auf. Besonders bevorzugt wirkt die Klemmkontur der Dichtkappe mit der Klemmnut in dem Spleißring zusammen.

Dabei ist es besonders bevorzugt, dass zwischen der Klemmkontur und der Klemmnut wenigstens eine Ader des Kabels oder das Kabel insgesamt geklemmt aufnehmbar ist. Dadurch wird eine besonders vorteilhafte Befestigung des Kabelendes an der Kabelabschlusseinrichtung erzielt, da beim Verschrauben der Schraubeinheit mit der Dichtkappe der dazwischen angeordnete Spleißring zusammen mit der Dichtkappe das aufgenommene Kabelende zuverlässig verklemmt.

Besonders bevorzugt sind mehrere Klemmkonturen und mehrere Klemmnuten über den Umfang definiert verteilt angeordnet. Das ermöglicht beispielsweise, dass ein mehradriges Kabel sicher zuverlässig geklemmt wird, wobei jede einzelne Ader des Kabels an einem Paar aus Klemmkontur und Klemmnut geklemmt wird. Besonders bevorzugt sind die Klemmkonturen sternförmig angeordnet, sodass sich die einzelnen Adern eines mehradrigen Kabels vom Zentrum aus sternförmig erstrecken. Dadurch werden besonders große Kriechstrecken zwischen den einzelnen Aderenden ermöglicht, was zusätzlich zur Sicherheit beiträgt.

Die Klemmnuten sind insbesondere V-förmig ausgestaltet und dienen zur Aufnahme der Aderenden, die dort von entsprechenden Klemmkonturen in Form von Profilen oder dergleichen geklemmt werden. Die Verteilung der Klemmkonturen und Klemmnuten kann symmetrisch über den Umfang verteilt vorgesehen sein. Es ist möglich, dass die einzelnen Klemmnuten und Klemmkonturen äquidistant zueinander vorgesehen sind. Möglich ist es sogar auch, dass einzelne Klemmkonturen in Gruppen angeordnet sind, wobei der Abstand einzelner Gruppen zueinander größer ist als der Abstand einzelner Adern in einer Gruppe.

Vorzugsweise ist zwischen dem Spleißring und der Dichtkappe wenigstens eine Dichteinrichtung vorgesehen. Die Dichteinrichtung kann beispielsweise wenigstens einen O-Ring umfassen oder als ein solcher ausgebildet sein.

Vorzugsweise ist radial innerhalb des Spleißrings eine Dichtungseinheit angeordnet. Insbesondere ist die Dichtungseinheit zwischen dem Kabel und der Innenkontur des Spleißrings vorgesehen.

Die Schraubeinheit kann wenigstens einen Dichtkonus aufweisen, der beim Verschrauben der Schraubeinheit mit der Dichtkappe eine Lamellenstruktur des Spleißrings zusammendrückt, sodass die Dichtungseinheit innerhalb des Spleißrings gegen ein eingestecktes Kabelende gedrückt wird und somit das Kabelende vor Eintritt von Wasser und Staub und dergleichen schützt.

Durch den Spleißring, der das Kabel insgesamt oder dessen einzelne Adern separat klemmt, wird eine hohe Zuverlässigkeit und Sicherheit erzielt. Selbst mit großer Kraft kann ein Kabel nicht ohne Weiteres aus der Kabelabschlusseinrichtung herausgezogen werden. Außerdem ist die erfindungsgemäße Kabelabschlusseinrichtung kostengünstig und einfach zu montieren.

Zur Montage kann der Mantel des Kabels auf einem Stück entfernt werden und es werden das Schraubteil und der Spleißring auf das Kabelende aufgeschoben. Die einzelnen Adern werden in den Klemmnuten fixiert und die überstehenden Enden können einfach abgeschnitten werden. Im Anschluss daran wird die Dichtkappe aufgeschoben und über einen Schraubendreher oder dergleichen winkelmäßig fixiert, während das Schraubteil mit der Dichtkappe verschraubt wird. Dadurch werden die einzelnen Adern zwischen den Klemmnuten und den Klemmkonturen geklemmt, sodass ein sehr fester Sitz des Kabelendes an der Kabelanschlusseinrichtung erfolgt.

Nach erfolgter Montage kann der Schraubendreher entfernt werden und eine Demontage ist ohne Werkzeug nicht möglich.

Durch das sternförmige Aufspleißen der Adern werden die offenen Aderenden soweit wie möglich auseinander gebracht, sodass ein zuverlässiger Schutz und größtmögliche Luft- und Kriechstrecken zur Verfügung gestellt werden.

Weitere Vorteile und Merkmale der vorliegenden Erfindung ergeben sich aus der Beschreibung des Ausführungsbeispiels, welches im Folgenden mit Bezug auf die beiliegenden Figuren erläutert wird.

In den Figuren zeigen:
- Fig. 1: eine perspektivische Ansicht einer erfindungsgemäßen Kabelabschlusseinrichtung;
- Fig. 2: eine Explosionsdarstellung einer Kabelabschlusseinrichtung nach Fig. 1;
- Fig. 3: eine Draufsicht auf die Dichtkappe der Kabelabschlusseinrichtung gemäß Fig. 1;
- Fig. 4: einen Querschnitt durch Kabelabschlusseinrichtung nach Fig. 1;
- Fig. 5: die Kabelabschlusseinrichtung nach Fig. 1 bei der Montage;
- Fig. 6: das Schraubteile und den Spleißring der Kabelabschlusseinrichtung nach Fig. 1 nach dem Einlegen einzelner Adern;
- Fig. 7: den Spleißring und das Schraubteil nach Fig. 6 nach dem Abschneiden überstehender Aderenden; und
- Fig. 8: eine Draufsicht auf ein Schraubteil mit einem darin enthaltenen Spleißring.

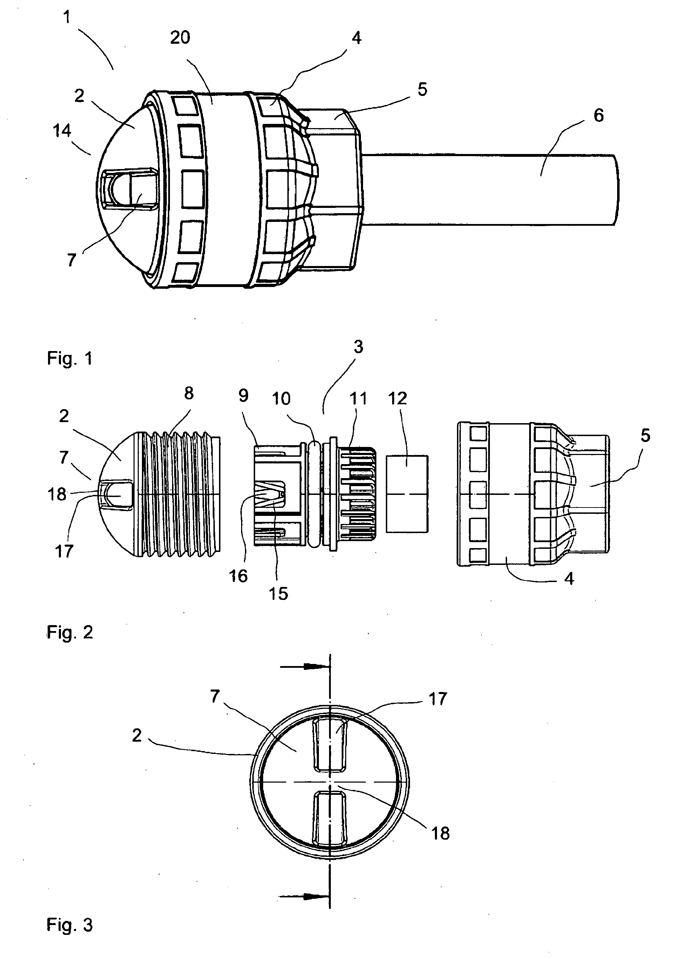

Mit Bezug auf die beiliegenden Figuren 1 bis 8 wird ein Ausführungsbeispiel der Erfindung erläutert, wobei Fig. 1 eine leicht perspektivische Ansicht einer erfindungsgemäßen Kabelabschlusseinrichtung 1 zeigt.

Die Kabelabschlusseinrichtung 1 umfasst eine Dichtkappe 2, die am äußeren Ende 14 ballig ausgestaltet ist, um der Hand wenig Widerstand zu bieten und ein unbeabsichtigtes Öffnen der Kabelabschlusseinrichtung 1 so zu verhindern.

Die Kabelabschlusseinrichtung 1 umfasst weiterhin ein Schraubteil bzw. eine Schraubeinheit 4, welche über Schlüsselflächen 5 verfügt, die mit einem Schraubenschlüssel, einer Zange oder einem sonstigen Werkzeug ergreifbar sind, um die Schraubeinheit 4 mit der Dichtkappe 2 zu verschrauben.

Die Schraubeinheit 4 bildet zusammen mit der Dichtkappe 2 das Gehäuse 20, welches ein darin aufgenommenes Kabelende 13 eines Kabels 6 berührsicher aufnimmt und zuverlässig vor Berührung, Überschlag oder dergleichen schützt.

An der Dichtkappe 2 ist eine Kontereinrichtung 7 vorgesehen, die wie in den Figuren 2 und 3 klar ersichtlich, hier Schlitze 17 und einen Steg 18 aufweist. Die Schlitze 17 bilden ein Durchgangsloch, welches von dem Steg 18 abgedeckt wird.

Wie in Fig. 2 dargestellt, weist die Dichtkappe 2 ein Außengewinde 8 auf, welches dafür vorgesehen ist, mit einem Innengewinde 24 der Schraubeinheit 4 verschraubt zu werden. Dabei wird zwischen der Schraubeinheit 4 und der Dichtkappe 2 der Spleißring 3 aufgenommen. An dem Spleißring 3 sind Klemmnutzen 16 mit Schrägen 15 vorgesehen, um in den Klemmnuten 16 die in Fig. 2 nicht dargestellten Einzeladern 19 des Kabels 6 klemmend aufzunehmen. Zwischen den einzelnen Klemmnuten 16 sind Codierungen 9 vorgesehen, die ein Einschieben des Spleißrings 3 nur in vordefinierten Positionen in die Dichtkappe 2 ermöglichen. Ein O-Ring 10 als Dichteinrichtung dient zur Abdichtung gegenüber der Dichtkappe 2.

An dem der Schraubeinheit 4 zugewandten Ende des Spleißrings 3 ist eine Lamellenstruktur 11 vorgesehen, die mit der Dichtungseinheit 12 beim Verschrauben zusammenwirkt, um das Kabelende 13 des Kabels 6 dichtend an der Schraubeinheit 4 aufzunehmen.

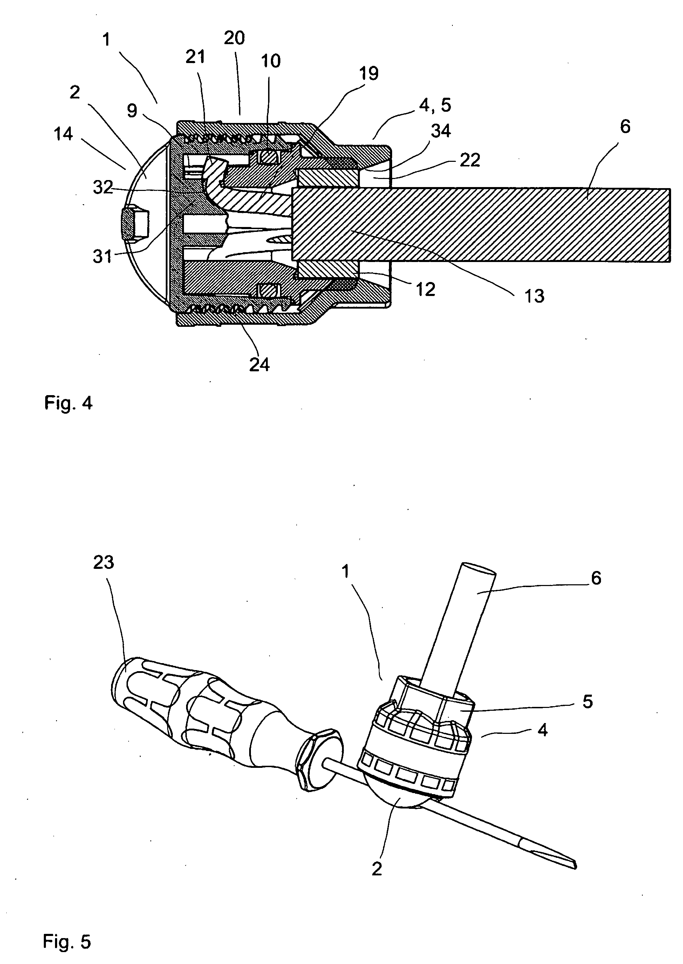

In Fig. 4 ist ein Querschnitt durch die Kabelabschlusseinrichtung 1 nach Fig. 1 dargestellt. Die Aderenden 21 der Einzeladern 19 des Kabels 6 sind durch die Klemmeinrichtungen 31 geklemmt. Jede Klemmeinrichtung 31 umfasst eine Klemmkontur 32 in der Dichtkappe 2 und eine Klemmnut 16 in dem Spleißring 3, sodass jede Einzelader 19 mit ihrem Aderende 21 zuverlässig zwischen Spleißring 3 und der Dichtkappe 2 geklemmt wird. Zur Abdichtung nach außen dient der O-Ring 10.

Zur Abdichtung des Kabelendes 13 gegenüber der Schraubeinheit 4 dient die Dichtungseinheit 12, die durch die zusammengedrückte Lamellenstruktur 11 auf das Kabelende 13 gedrückt wird.

Beim Verschrauben der Schraubeinheit 4 wird das Außengewinde 8 der Dichtkappe 2 in das Innengewinde 24 der Schraubeinheit 4 eingeschraubt. Vor dem Verschrauben wird das Kabelende 13 in die Einführöffnung 22 eingeschoben.

Fig. 5 zeigt die Kabelabschlusseinrichtung 1 bei der Montage, wobei durch die Kontereinrichtung 7 ein Werkzeug 23 durchgesteckt ist, damit die Schraubeinheit 4 mit der Dichtkappe 2 verschraubt werden kann.

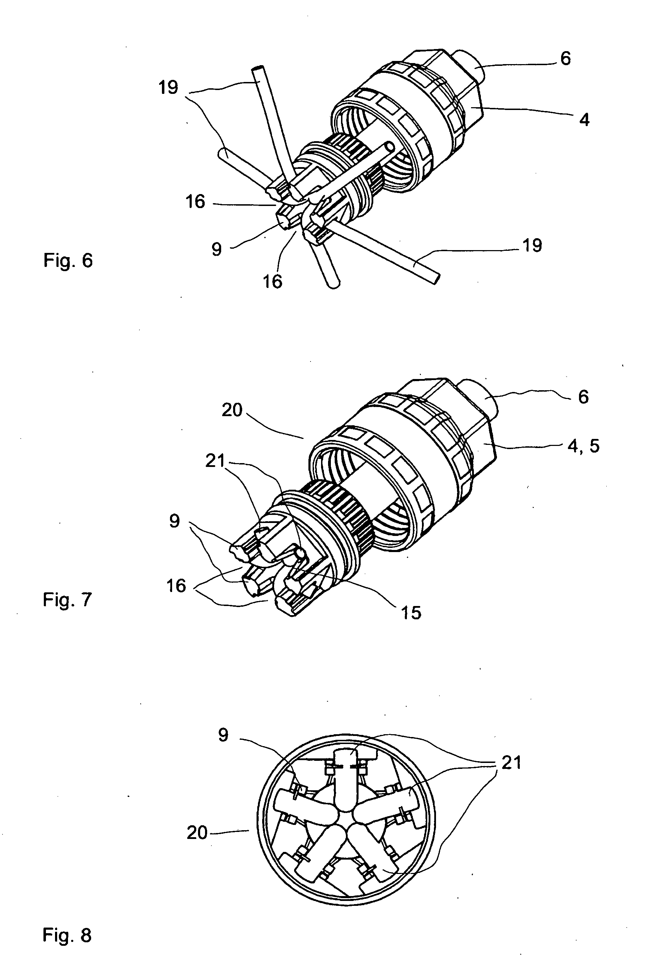

In den Fig. 6, 7 und 8 sind weitere Schritte bei der Montage dargestellt. Mit Bezug auf diese Figuren wird die Montage im Folgenden erläutert. Bei der Montage wird das Kabelende 13 des Kabels 6 durch die Einführöffnung 22 einer Schraubeinheit 4 durchgeschoben. Anschließend wird das Kabelende 13 durch den Spleißring 3 durchgeführt. Die Einzeladern werden freigelegt und in die Klemmnuten 16 des Spleißrings umgelegt. Die überstehenden Enden der einzelnen Adern 19 werden abgeschnitten, sodass die Enden 21 der Einzeladern 19 im Bereich der Klemmnuten 16 angeordnet sind.

Anschließend wird die Schraubeinheit 4 mit der Dichtkappe 2 verschraubt, wobei der Spleißring drehfest in der Dichtkappe 2 aufgenommen wird.

Die Kontereinrichtung 7 an der Dichtkappe 2 kann grundsätzlich beliebig gestaltet sein. Beispielsweise ist es auch möglich, dass zwei beabstandete Löcher in der Dichtkappe vorgesehen sind, in die ein Werkzeug eingeführt wird, sodass eine Fixierung der Dichtkappe gegenüber Rotation möglich ist.

Die erfindungsgemäße Kabelabschlusseinrichtung ermöglicht eine hohe Dichtigkeit vor dem Eindringen von Wasser und Staub, da durch die Abdichtung des Spleißringes nach außen durch beispielsweise einen O-Ring ein hohes Maß an Dichtigkeit erzielbar ist. Weiterhin wird zwischen dem Kabelende 13 und dem Spleißring durch die beispielsweise gummielastische Dichteinheit ebenfalls ein hohes Maß an Dichtheit erreicht.

Die Erfindung bietet viele Vorteile, da auch ein hohes Maß an Zugfestigkeit erzielbar ist.

Die Klemmung der Einzeladern zwischen dem Spleißring und der Dichtkappe erlaubt ein hohes Maß an Zugfestigkeit. Gleichzeitig wird auf eine Befestigung der einzelnen Adern über Schrauben, Federn oder ähnliches verzichtet. Es ist möglich, einfache Kunststoffteile zu verwenden, die über standardisierte Dichtungen abgedichtet werden.

Zum erneuten Öffnen ist ein Werkzeug erforderlich, selbst wenn sich bei den verwendeten Kunststoffteilen ein gewisser Setzvorgang eingestellt haben sollte.

Durch eine sternförmige Anordnung der Einzeladern werden besonders große Luft- und Kriechstrecken zur Verfügung gestellt.

### Bezugszeichenliste

| | |
|---|---|
| Kabelabschlusseinrichtung | 1 |
| Dichtkappe | 2 |
| Spleißring | 3 |
| Schraubeinheit | 4 |
| Schlüsselfläche | 5 |
| Kabel | 6 |
| Kontereinrichtung | 7 |
| Außengewinde | 8 |
| Codierung | 9 |
| Dichteinrichtung, O-Ring | 10 |
| Lamellenstruktur | 11 |
| Dichtungseinheit | 12 |
| Kabelende | 13 |
| äußeres Ende | 14 |
| Schräge | 15 |
| Klemmnut | 16 |
| Schlitz | 17 |
| Steg | 18 |
| Einzelader | 19 |
| Gehäuse | 20 |
| Aderende | 21 |
| Einführöffnung | 22 |
| Werkzeug | 23 |
| Innengewinde | 24 |
| Klemmeinrichtung | 31 |
| Klemmkontur | 32 |
| Dichtkonus | 34 |

## Patentansprüche

1. Kabelabschlusseinrichtung (1) mit einem Gehäuse (20) und einer Einführöffnung (22) für ein Kabel (6), um das Kabelende (13) berührsicher zu terminieren, wobei das Gehäuse (20) eine Dichtkappe (2) und eine damit zusammenwirkende Schraubeinheit (4) umfasst, und wobei an der Schraubeinheit (4) die Einführöffnung (22) zur Aufnahme wenigstens eines Kabelendes (13) vorgesehen ist,
**dadurch gekennzeichnet,**
**dass** die Dichtkappe (2) zum äußeren Ende (14) hin ballig abgerundet ausgebildet ist, und dass die Dichtkappe (2) über wenigstens einen Längsabschnitt ein Außengewinde (8) und die Schraubeinheit (4) über wenigstens einen Längsbereich ein Innengewinde (24) aufweist.

2. Kabelabschlusseinrichtung (1) nach Anspruch 1, wobei an dem äußeren Ende (14) der Dichtkappe (2) eine Kontereinrichtung (7) vorgesehen ist, zu deren Fixierung insbesondere ein Werkzeug (23) erforderlich ist.

3. Kabelabschlusseinrichtung (1) nach Anspruch 2, wobei die Kontereinrichtung (7) wenigstens einen Schlitz (17) und/oder ein Durchgangsloch (18) quer zur Längserstreckung eines zu terminierenden Kabels (6) aufweist.

4. Kabelabschlusseinrichtung (1) nach einem der vorhergehenden Ansprüche, wobei wenigstens ein Spleißring (3) wenigstens teilweise innerhalb der Dichtkappe (2) aufgenommen ist.

5. Kabelabschlusseinrichtung (1) nach einem der vorhergehenden Ansprüche, wobei die Dichtkappe (2) eine Klemmeinrichtung (31) mit wenigstens einer Klemmkontur (32) und/oder wobei der Spleißring (3) wenigstens eine Klemmnut (16) aufweist.

6. Kabelabschlusseinrichtung (1) nach dem vorhergehenden Anspruch, wobei zwischen der Klemmkontur (32) und der Klemmnut (16) wenigstens eine Ader (19) des Kabels (6) oder das Kabel (6) insgesamt geklemmt aufnehmbar ist.

7. Kabelabschlusseinrichtung (1) nach einem der beiden vorhergehenden Ansprüche, wobei mehrere Klemmkonturen (32) und Klemmnuten (16) über dem Umfang definiert verteilt angeordnet sind.

8. Kabelabschlusseinrichtung (1) nach einem der vorhergehenden Ansprüche 4 oder 5, wobei zwischen dem Spleißring (3) und der Dichtkappe (2) wenigstens eine Dichteinrichtung (10) und insbesondere wenigstens ein O-Ring vorgesehen ist.

9. Kabelabschlusseinrichtung (1) nach einem der vorhergehenden Ansprüche 4, 5 oder 8, wobei radial innerhalb des Spleißrings (3) eine Dichtungseinheit (12) angeordnet ist.

10. Kabelabschlusseinrichtung (1) nach Anspruch 9, wobei die Schraubeinheit (4) einen Dichtkonus (34) aufweist, und wobei beim Verschrauben der Schraubeinheit (4) mit der Dichtkappe (2) eine Lamellenstruktur (11) des Spleißrings (3) zusammengedrückt wird, sodass die Dichtungseinheit (12) gegen ein eingestecktes Kabelende (13) gedrückt wird.

## Claims

1. A cable termination device (1), comprising a housing (20) and an insertion opening (22) for a cable (6) so as to terminate the cable end (13) such that it is safe to touch, wherein the housing (20) comprises a termination cap (2) and a screw unit (4) interacting therewith, and wherein the insertion opening (22) for receiving at least one cable end (13) is provided at the screw unit (4),
**characterized in**
**that** the termination cap (2) is spherically rounded towards the outer end (14), and that the termination cap (2) has an external thread (8) over at least one longitudinal portion, and the screw unit (4) has an internal thread (24) over at least one longitudinal region.

2. The cable termination device (1) according to claim 1, wherein at the outer end (14) of the termination cap (2), a locking device (7) is provided, the fixation of which requires in particular a tool (23).

3. The cable termination device (1) according to claim 2, wherein the locking device (7) has at least one slit (17) and/or a through-hole (18) transverse to the longitudinal extent of a cable (6) to be terminated.

4. The cable termination device (1) according to any one of the preceding claims, wherein at least one splice ring (3) is received at least partially inside the termination cap (2).

5. The cable termination device (1) according to any one of the preceding claims, wherein the termination cap (2) has a clamping device (31) with at least one clamping contour (32) and/or wherein the splice ring (3) has at least one clamping groove (16).

6. The cable termination device (1) according to the preceding claims, wherein at least one core (19) of the cable (6) or the cable (6) as a whole can be received by clamping between the clamping contour (32) and the clamping groove (16).

7. The cable termination device (1) according to any one of the two preceding claims, wherein a plurality of clamping contours (32) and clamping grooves (16) are arranged distributed in a defined manner over the circumference.

8. The cable termination device (1) according to any one of the preceding claims 4 and 5, wherein at least one sealing ring (10) and in particular at least one O-ring is provided between the splice ring (3) and the termination cap (2).

9. The cable termination device (1) according to any one of the preceding claims 4, 5 or 8, wherein a sealing unit (12) is arranged radially inside the splice ring (3).

10. The cable termination device (1) according to claim 9, wherein the screw unit (4) has a sealing cone (34), and wherein a lamellar structure (11) of the splice ring (3) is compressed when screwing the screw unit (4) together with the termination cap (2) so that the sealing unit (12) is pressed against an inserted cable end (13).

## Revendications

1. Dispositif de raccordement de câbles (1) comprenant un boitier (20) et une ouverture d'entrée (22) pour un câble (6) pour terminer l'extrémité du câble (13) avec une sécurité de toucher, sachant que le boîtier (20) comprend un capot étanche (2) et une unité de vissage (4) coopérant avec celui-ci, et sachant que l'ouverture d'entrée (22) est prévue sur l'unité de vissage (4) pour recevoir au moins une extrémité de câble (13),
**caractérisé en ce que**
le capot étanche (2) est formé en étant arrondi de façon sphérique vers l'extrémité extérieure (14), et que le capot étanche (2) présente un filetage mâle (8) sur au moins une portion longitudinale et l'unité de vissage (4) présente un filetage femelle (24) sur au moins une portion longitudinale.

2. Dispositif de raccordement de câbles (1) selon la revendication 1, dans lequel un contre-dispositif (7) est prévu sur l'extrémité extérieure (14) du capot étanche (2), pour la fixation duquel un outil (23) est particulièrement nécessaire.

3. Dispositif de raccordement de câbles (1) selon la revendication 2, dans lequel le contre-dispositif (7) présente au moins une fente (17) et/ou un trou traversant (18) transversal à l'étirement longitudinal d'un câble (6) à terminer.

4. Dispositif de raccordement de câbles (1) selon l'une des revendications précédentes, dans lequel au moins une bague d'épissure (3) est reçue au moins partiellement à l'intérieur du capot étanche (2).

5. Dispositif de raccordement de câbles (1) selon l'une des revendications précédentes, dans lequel le capot étanche (2) présente un dispositif de serrage (31) comprenant au moins un contour de serrage (32) et/ou dans lequel la bague d'épissure (3) présente au moins une encoche de serrage (16).

6. Dispositif de raccordement de câbles (1) selon la revendication précédente, dans lequel au moins une veine (19) du câble (6) ou le câble (6) en entier peut être reçu(e) en étant serré(e) entre le contour de serrage (32) et l'encoche de serrage (16).

7. Dispositif de raccordement de câbles (1) selon l'une des deux revendications précédentes, dans lequel plusieurs contours de serrage (32) et encoches de serrage (16) sont disposés en étant répartis de façon définie sur le pourtour.

8. Dispositif de raccordement de câbles (1) selon l'une des revendications précédentes 4 ou 5, dans lequel au moins un dispositif d'étanchéité (10) et en particulier au moins un joint torique, est prévu entre la bague d'épissure (3) et le capot étanche (2).

9. Dispositif de raccordement de câbles (1) selon l'une des deux revendications précédentes 4, 5 ou 8, dans lequel une unité d'étanchéité (12) est disposée radialement à l'intérieur de la bague d'épissure (3).

10. Dispositif de raccordement de câbles (1) selon la revendication 9, dans lequel l'unité de vissage (4) présente un cône d'étanchéité (34), et dans lequel, lorsque l'on visse l'unité de vissage (4) avec le capot étanche (2), une structure à lamelles (11) de la bague d'épissure (3) est comprimée, de telle sorte que l'unité d'étanchéité (12) est appuyée contre une extrémité de câble (13) enfichée.
